Europäisches Patentamt

European Patent Office

Office européen des brevets

(19)

(11) Veröffentlichungsnummer: **0 058 202**
**B1**

(12)

# EUROPÄISCHE PATENTSCHRIFT

(45) Veröffentlichungstag der Patentschrift:
27.08.86

(21) Anmeldenummer: 81902489.4

(22) Anmeldetag: 25.08.81

(86) Internationale Anmeldenummer:
PCT/EP 81/00138

(87) Internationale Veröffentlichungsnummer:
WO 82/00594 (04.03.82 Gazette 82/7)

(51) Int. Cl.⁴: **A 63 C 9/08, H 02 J 9/06**

(54) STROMVERSORGUNGSSCHALTUNG FÜR ELEKTRONISCHE SICHERHEITS-SHIBINDUNGEN.

(30) Priorität: 25.08.80 DE 3031981

(43) Veröffentlichungstag der Anmeldung:
25.08.82 Patentblatt 82/34

(45) Bekanntmachung des Hinweises auf die Patenterteilung:
27.08.86 Patentblatt 86/35

(84) Benannte Vertragsstaaten:
FR

(56) Entgegenhaltungen:
DE - A - 2 010 597
DE - A - 2 519 544
DE - A - 2 521 462
DE - A - 2 658 077
FR - A - 2 418 655
US - A - 4 181 842

Electronic Design, Band 24, Nr. 5, veröffentlicht am 1. März 1976 (Rochelle Park, US9 A. Levy "Keep your power flowing with an uninterruptible supply" insbesondere Seite 62, linke SPalte, Zeilen 1 bis 8; Siete 63, linke Spalte, Zeilen 19 bis 30 und Figur 3
Ski Business, Band 20, Oktober 1980 (New York, US) S. Masia "Shoptalk-marker unvells electro-binding" siehe Seite 29

(73) Patentinhaber: MARKER Patentverwertungsgesellschaft mbH, Sihlbruggstrasse, CH-6340 Baar (CH)

(72) Erfinder: D'ANTONIO, Nicholas Fred, 7695 Admiral Drive, Liverpool, N.Y. 13088 (US)
Erfinder: KNABEL, Walter, Heubergweg 24, D-8105 Farchant (DE)
Erfinder: STEMPFHUBER, Lorenz, Förhenweg 12, D-8100 Garmisch-Partenkirchen (DE)

(74) Vertreter: Lorenz, Eduard, Rechtsanwälte Eduard Lorenz - Bernhard Seidler Margrit Seidler - Dipl.-Ing. Hans-K. Gossel Dr. Ina Philipps - Dipl.-Chem. Rainer Wulf Widenmayerstrasse 23, D-8000 München 22 (DE)

EP 0 058 202 B1

## Beschreibung

Die Erfindung betrifft eine Stromversorgungsschaltung für elektronische Sicherheits-Skibindungen mit Auslösestromkreis und Wandler nach dem Oberbegriff des Patentanspruchs 1. Eine solche Schaltung ist in FR-A-2 418 655 veröffentlicht.

Die Sicherheit elektronischer Sicherheits-Skibindungen hängt entscheidend von der Stromversorgung ab. Ist zur Versorgung elektronischer Sicherheits-Skibindungen nur eine Batterie vorgesehen, ist bei Ausfall dieser Batterie die Bindung unbrauchbar, so dass bei plötzlichem Stromausfall ein erhebliches Sicherheitsrisiko entstehen kann.

Aufgabe der Erfindung ist es daher, eine Stromversorgungsschaltung für elektronische Sicherheits-Skibindungen zu schaffen, die auch dann noch ausreichende Sicherheit gewährt, wenn eine die Bindung speisende Batterie ausfällt oder in ihrer Kapazität unter ein die Sicherheitsfunktionen aufrechterhaltendes Niveau absinkt.

Erfindungsgemäss wird diese Aufgabe durch die kennzeichnenden Merkmale des Patentanspruchs 1 gelöst.

Die erfindungsgemässe Stromversorgungseinrichtung stellt sicher, dass nach Ausfall einer Batterie die andere als Reservebatterie zur Verfügung steht, die sämtliche Sicherheitsfunktionen der elektronischen Bindung aufrechterhält. Durch die erfindungsgemässe Stromversorgungsschaltung wird dadurch nicht nur eine erhöhte Sicherheit gegen Stromausfall geschaffen, sondern die Funktionsfähigkeit der Bindung auch über einen längeren Zeitraum aufrechterhalten, weil jede der beiden Batterien die Stromversorgung der elektronischen Bindung übernimmt, so lange sie über eine ausreichende Kapazität verfügt. Um die Sicherheit der Stromversorgungsschaltung weiter zu erhöhen, ist eine elektronische Steuerschaltung vorgesehen, die den die Ladung für den Auslöseimpuls speichernden Kondensator als Stromversorgungsquelle an die elektrische Schaltung anschliesst, wenn deren Stromversorgung durch die Batterie unterbrochen ist. Derartige Unterbrechungen können kurzzeitig beispielsweise bei Vibrationen auftreten. Die geringe Entladung des Auslösekondensators während derartig kurzer Zeiträume kann in Kauf genommen werden, weil dieser noch immer eine ausreichende Ladung besitzt, um im Falle eines Auslöseimpulses einen ausreichenden Stromstoss an den die Auslösemechanik steuernden Elektromagneten abzugeben.

Aus der Veröffentlichung US-A-4 181 842 ist eine Stromversorgungsschaltung zur allgemeinen Verwendung mit zwei Batterien bekannt, die durch eine elektrische Steuerschaltung mit einer elektronischen Schaltung verbunden sind, wobei diese nur von einer Batterie gespeist wird und die Steuerschaltung die Stromversorgung auf die andere Batterie umschaltet, wenn die Ladung der ersten Batterie unter einen Grenzwert abgesunken ist, der keine ausreichende Stromversorgung mehr sicherstellt. Für die erfindungsgemässe Stromversorgungsschaltung ist jedoch zusätzlich noch eine elektronische Steuerschaltung vorgesehen, die den die Ladung für den Auslöseimpuls speichernden Kondensator als Stromversorgungsquelle an die elektronische Schaltung anschliesst, wenn deren Stromversorgung durch die Batterie unterbrochen ist, so dass diese bei Verwendung für elektronische Sicherheits-Skibindungen eine gesteigerte Sicherheit schafft.

In weiterer Ausgestaltung der Erfindung wird eine zusätzliche Sicherheit dadurch geschaffen, dass eine elektrische Steuerschaltung vorgesehen ist, die bei Absinken der Kapazität auch der zweiten Batterie unter den Grenzwert alle Stromkreise unterbricht, die nicht unmittelbar der Sicherheitsauslösung dienen.

Nachstehend wird eine Massnahme beschrieben, mit der die Betriebssicherheit einer elektronischen Skibindung erhöht wird, indem bei Ausfall der Haupt- und der Reservestromversorgung wegen Erschöpfung der Batterie oder Störungen in der Schaltung andere Stromquellen verwendet werden. Es sind drei redundante Stromquellen vorgesehen, und zwar zwei voneinander unabhängige Batteriesätze und Kondensatoren mit grosser Speicherkapazität, die normalerweise die Energie liefern, die für die Betätigung der elektromagnetischen Auslöseeinrichtung erforderlich ist.

Der Betrieb des Systems beruht auf der Funktion von logischen Schaltkreisen, die bewirken, dass die Hauptstromquelle abgeschaltet und die Reservestromquelle angeschaltet wird, wenn die Spannung der Hauptstromquelle unter einen vorherbestimmten Wert sinkt. Beim Umschalten wird ein akustisches oder optisches Warnsignal erzeugt, damit der Skifahrer weiss, dass die Stromquelle in der Skibindung wieder aufgeladen bzw. ersetzt werden muss. Solange dies nicht geschehen ist, wird das Warnsignal jedesmal wiederholt, wenn beim Einsteigen in die Bindung die EIN-AUS-Schalter betätigt werden. Die Reservestromquelle hat dieselbe Lebensdauer wie die Hauptstromquelle. Wenn der Skifahrer die Anzeige der Erschöpfung der Hauptstromquelle mehrmals missachtet und die Bindung weiterbenutzt, bis auch die Spannung der Reservestromquelle unter den Schwellenwert sinkt, wird ein zweites (unterschiedliches) akustisches oder optisches Warnsignal erzeugt und bewirkt die Sicherheitsschaltung, dass nur noch die wichtigsten Verbraucher eingeschaltet bleiben, z.B. die Kraftaufnehmer, die Spannungsfrequenzwandler und die Auslöseeinrichtung. Wenn durch die Sicherheitsschaltung eine Batterie von der Stromversorgungsschiene des Systems abgeschaltet wird, hat diese Batterie normalerweise noch eine Lebensdauer von 20 bis 30 Stunden. Damit nun das System nicht funktionsunfähig wird, wenn die Hauptstromquelle und die Reservestromquelle bis auf die Schwellenspannung entladen worden sind, wählt die Sicherheitsschaltung die stärkste der drei Stromquellen aus, die aus der Hauptbatterie, der Reservebatterie und den vorstehend erwähnten Speicherkondensatoren bestehen. Dadurch wird gewährleistet, dass die drei Stromquellen gleichmässig verbraucht werden, bis die Spannung, auf die die Kondensatoren aufgeladen werden, nicht mehr zur Betätigung der elektromagnetischen Auslöseeinrichtung genügt, so dass die Bindung nicht mehr funktionsfähig ist. Die Frage, wie sich das System knapp vor dem Erreichen dieses Zustandes verhalten soll, ist noch offen. Soll ein letztes Warnsignal abgegeben werden? Soll die Bindung sich öffnen, obwohl sie vielleicht gerade in Benutzung steht? Oder kann der Skifahrer weiterfahren, bis er den Auslöseknopf drückt und er sich von der Bindung nur noch befreien kann, indem er den Skischuh auszieht oder eine mechanische Hilfsauslöseeinrichtung betätigt? Die Erfahrung wird lehren, welche Lösung vorzuziehen ist.

Die aufeinanderfolgende Verwendung der Stromquellen in der vorstehend beschriebenen Weise erhöht die Zuverlässigkeit der Skibindung, weil gewährleistet wird, dass die Sicherheitsschaltung auch dann ununterbrochen mit Strom gespeist wird, wenn die mechanischen Schalter infolge von starken Stössen oder Schwingungen kurzzeitig öffnen. Da die elektronischen Schalter zum Anschalten der Speicherkondensatoren durch einen solchen Stoss nicht beeinflusst werden, ist eine ununterbrochene Stromversorgung während des ganzen normalen Betriebes der Skibindung gewährleistet.

Die Arbeitsweise des Systems wird anhand der Zeichnungen erläutert. Darin zeigt

Fig. 1 ein Blockschema mit den wichtigsten Funktionselementen und

Fig. 2 ein Schaltschema einer Ausführungsform.

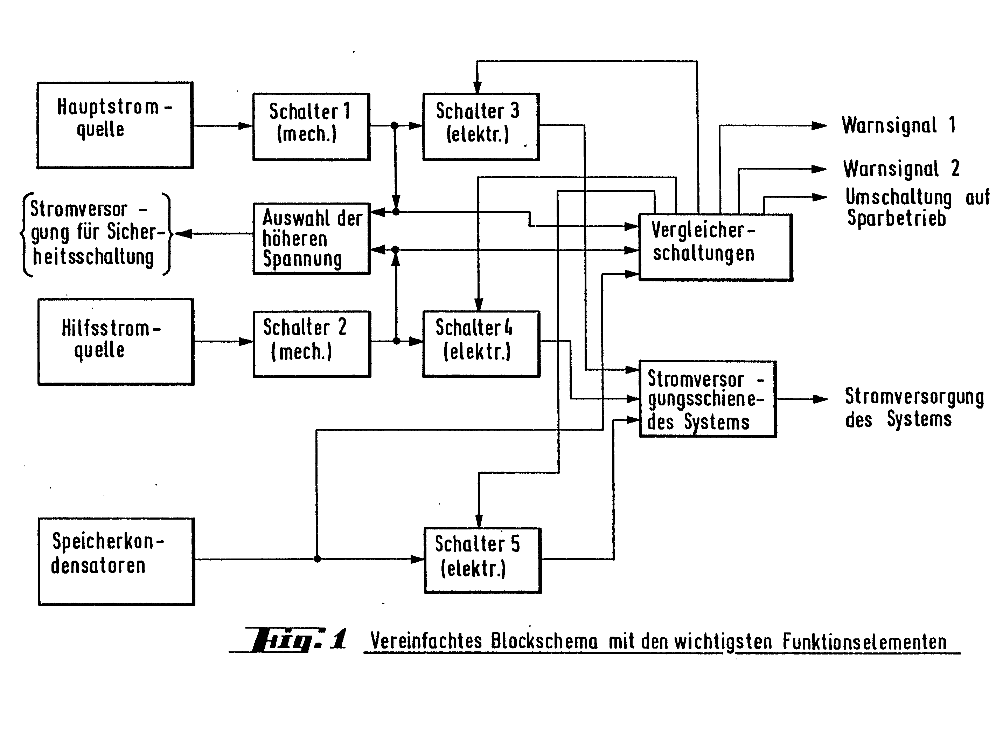

Gemäss Fig. 1 werden, wie vorstehend beschrieben, mechanische Schalter 1 und 2 betätigt, wenn der Skischuh in die Bindung eingesetzt wird. An die Sicherheitsschaltung wird nur die höhere der beiden Spannungen angelegt. Dies ist normalerweise die Spannung der Reservestromquelle, weil die Hauptstromquelle zunächst das ganze Verarbeitungssystem speist und daher eine niedrigere Spannung hat. Der geringe Stromverbrauch der Reservestromquelle ist beabsichtigt und vorteilhaft, weil es beabsichtigt ist, in der Skibindung Lithiumbatterien zu verwenden, die durch eine ständige Entnahme eines schwachen Stroms daran gehindert werden «einzuschlafen», was bei Lithiumbatterien häufig zu Schwierigkeiten führt. Die Vergleicherschaltungen stellen fest, wann die Spannung einer der Stromquellen unter den vorherbestimmten Wert sinkt, bei dem die Umschaltung erfolgen soll, und geben die Signale ab, die bewirken, dass eine andere Stromquelle an die Stromversorgungsschiene des Systems angeschlossen wird. Die Vergleicherschaltungen erzeugen ferner zwei Warnsignale, und zwar eines für die Hauptstromquelle und eines für die Reservestromquelle. Nach dem Abschalten der Reservestromquelle wird das System auf Sparbetrieb geschaltet, d.h. dass nur noch die wichtigsten Verbraucher angeschlossen bleiben.

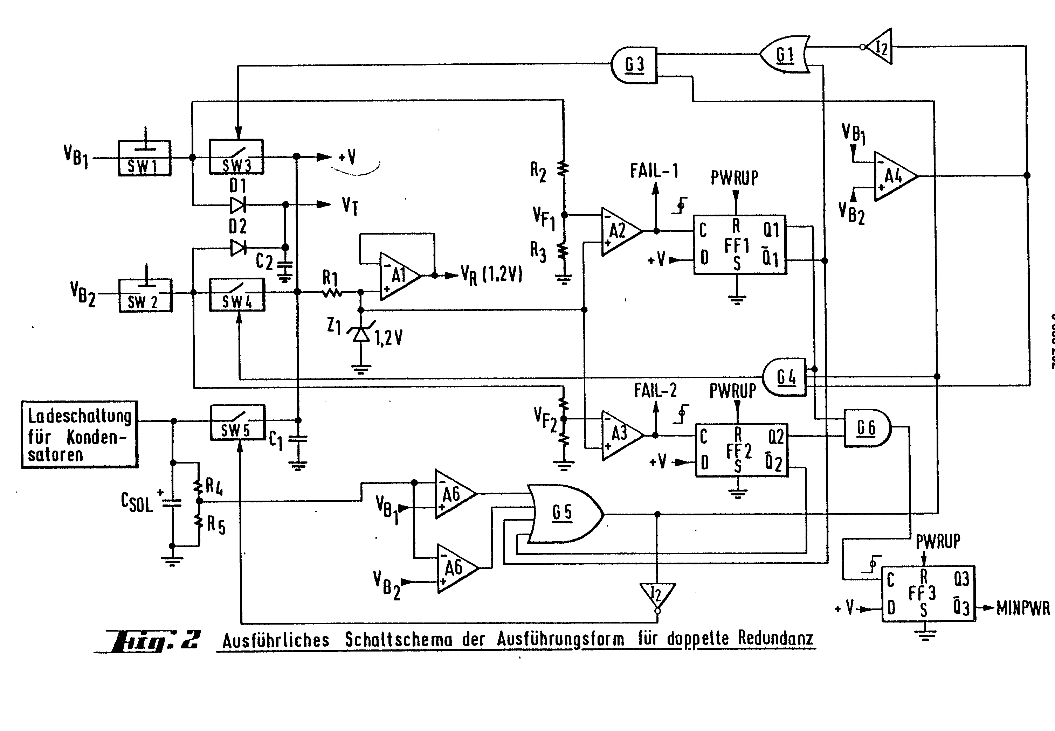

Fig. 2 ist ein ausführliches Schaltbild einer Ausführungsform mit doppelt redundanter Stromversorgung. Zunächst wird der normale Betrieb beschrieben, bei dem beide Batterien genügend geladen sind und keine Fehler in der Schaltung aufgetreten sind. Der Betrieb beginnt, wenn durch das Einsteigen in die Skibindung die mechanischen Schalter SW1 und SW2 geschlossen werden. Dadurch wird die Hauptstromquelle $V_{B1}$ an die Diode D1 und die Reservestromquelle $V_{B2}$ an die Diode D2 angelegt. Die höhere der beiden Spannungen wird durch die entsprechende Diode weitergegeben, so dass an die andere Diode eine Sperrvorspannung angelegt und ferner die Spannung $V_T$ erhalten wird, die für den Betrieb der elektronischen Einrichtungen der Sicherheitsschaltung erforderlich ist. Das an $FF_1$, $FF_2$ und $FF_3$ angelegte Rücksetzsignal PWRUP (System eingeschaltet) gewährleistet, dass bei Betriebsbeginn an allen Aufgängen $\bar{Q}$ das Grosssignal liegt, so dass das über das ODER-Gatter G1 weitergegebene Signal $\bar{Q}_1$ bewirkt, dass der elektronische Schalter SW3 schliesst und die Systemspannung an $+V$ angelegt wird. Da an dem Ausgang Q1 des $FF_1$ das Kleinsignal liegt, liegt auch am Ausgang des UND-Gatters G4 das Kleinsignal und ist der Schalter SW4 offen. Daher ist die Reservestromquelle $V_{B2}$ von der Stromversorgungsschiene $+V$ abgetrennt. Der Verstärker A1, der Widerstand R1 und die Zenerdiode Z1 bilden eine Schaltung zur Abgabe einer stabilisierten Spannung $V_R$, die in diesem Beispiel 1,2 V beträgt. Der Widerstand R1 ist so klein, dass der durch die Zenerdiode Z1 fliessende Strom genügt, um die Bezugsspannung von 1,2 V aufrechtzuerhalten, bis die Spannung der an die Stromversorgungsschiene $+V$ angeschlossenen Stromquelle unter den vorherbestimmten Schwellenwert sinkt.

Der Verstärker A1 ist ein Spannungsfolger, der eine Spannungsquelle niedriger Impedanz darstellt, die eine stabilisierte Spannung an die diese benötigenden Teile des Systems abgibt. Der Verstärker A2 ist ein Vergleicher, dessen Minuseingang mit dem Abgriff des Spannungsteilers verbunden ist, der aus den Widerständen R2 und R3 besteht. Die Spannungsteilerspannung $V_{F1}$ sinkt auf 1,2 V, wenn die Ausgangsspannung der Hauptstromquelle $V_{B1}$ so weit gesunken ist, dass die Reservestromquelle an das System angeschaltet wird. In diesem Fall erscheint am Ausgang von A2 das Grosssignal, so dass ein Warnsignal FAIL-1 erzeugt wird. Gleichzeitig bewirkt der Spannungsanstieg ein Umtasten von $FF_1$, so dass am Ausgang Q1 das Grosssignal und am Ausgang $\bar{Q}_1$ das Kleinsignal erscheint. FF2 hat hinsichtlich der Batterie $V_{B2}$ dieselbe Funktion. Bei normalem Ablauf liegt jetzt am Ausgang $Q_2$ das Kleinsignal und am Ausgang $\bar{Q}_2$ das Grosssignal, weil die Batterie $V_{B2}$ jetzt annähernd voll geladen sein dürfte. Aus demselben Grund gibt der Vergleicher A4, mit dessen Eingängen $V_{B1}$ und $V_{B2}$ verbunden sind, das Grosssignal an das NICHT-Glied I1 ab. Bei einem Kleinsignal an $\bar{Q}_1$ und am Ausgang von I1 liegen an beiden Eingängen des ODER-Gatters G1 Kleinsignale, so dass auch an dessen Ausgang ein Kleinsignal liegt. Infolgedessen liegt auch am Ausgang des Gatters G3 ein Kleinsignal, obwohl an den anderen Eingang von G3 jetzt das ODER-Gatter G5 ein Grosssignal anlegt, an dessen einen Eingang von dem Ausgang $\bar{Q}_2$ ein Grosssignal angelegt wird.

Wenn am Ausgang von G3 das Kleinsignal erscheint, öffnet der Schalter SW3, so dass die Batterie $V_{B1}$ von der Stromversorgungsschiene $+V$ abgeschaltet wird. Da am Ausgang Q1 das Grosssignal liegt, liegt auch am Ausgang von A4 das Grosssignal und am Ausgang von G5 das Grosssignal. Beim Auftreten des Grosssignals am Ausgang des UND-Gatters G4 schliesst jetzt der Schalter SW4, so dass die Batterie $V_{B2}$ an die Stromversorgungsschiene angelegt wird. Vorstehend wurde beschrieben, welche Vorgänge durchgeführt werden, wenn nach normalem Verbrauch von $V_{B1}$ diese abgeschaltet und $V_{B2}$ angeschaltet wird. Ohne eine dritte Stromquelle wäre das UND-Gatter G3 nicht erforderlich und würde der Verstärker A4 wiederholt seinen Zustand ändern und an die Stromversorgungsschiene $+V$ immer jene der beiden Batterien $V_{B1}$ und $V_{B2}$ anlegen, welche die höhere Spannung hat. Nachstehend ist nun beschrieben, wie die dritte Stromquelle an das System angeschaltet wird.

Wenn $V_{B2}$ so weit erschöpft ist, dass am Ausgang des Vergleichers A3 das Grosssignal erscheint, wird das Warnsignal FAIL-2 erzeugt und bewirkt der Spannungsanstieg, dass FF2 umgetastet wird. Infolgedessen erscheint am Ausgang Q2 das Grosssignal und am Ausgang $\bar{Q}_2$ das Kleinsignal. Infolge der Grosssignale an den Ausgängen Q1 und Q2 erscheint am Ausgang des UND-Gatters G6 das Grosssignal und wird daher FF3 umgetastet: Dadurch wird das System auf MINPWR (Sparbetrieb) geschaltet und erscheint am Ausgang $\bar{Q}_3$ das Kleinsignal, so dass die Schalter für alle für die Auslösung der Bindung nicht unbedingt erforderlichen Funktionen des Systems öffnen. An den Ausgängen $\bar{Q}_1$ und $\bar{Q}_2$ liegt jetzt das Kleinsignal, so dass an zwei der vier Eingänge des ODER-Gatters G5 das Kleinsignal liegt. Wie vorstehend beschrieben wurde, wird die dritte Stromquelle von den Speicherkondensatoren gebildet, die zur Speisung des Elektromagneten der elektromechanischen Auslöseeinrichtung dienen. Diese Kondensatoren sind mit $C_{SOL}$ bezeichnet. Die Widerstände R4 und R5 bilden einen sehr hochohmigen Spannungsteiler, um den Stromfluss durch diesen klein zu halten. Der Spannungsteiler ist mit je einem Eingang der Verstärker A5 und A6 verbunden, die je einen Vergleicher bilden.

Der Spannungsteiler soll gewährleisten, dass die Systemspannung und die Kondensatorspannung miteinander kompatibel sind, sofern die normale Kondensatorspannung höher ist als die normale Systemspannung; andernfalls kann der Spannungsteiler entfallen. An dem Abgriff von R4, R5 liegt die niedrigste Spannung, auf die der Elektromagnet noch anspricht. Wenn diese Spannung höher ist als die Spannung von $V_{B1}$, liegt am Ausgang von A5 das Kleinsignal, und wenn sie höher ist als die Spannung der Batterie $V_{B2}$, liegt am Ausgang von A6 das Kleinsignal. Wenn an den Ausgängen von A5 und A6 das Kleinsignal liegt, liegt an allen Eingängen des ODER-Gatters G5 das Kleinsignal und sind die UND-Gatter G3 und G4 geschlossen und daher die Schalter SW3 und SW4 offen. Infolge der in dem NICHT-Glied I2 durchgeführten Negation ist jetzt der Schalter SW5 geschlossen, so dass die Speicherkondensatoren an die Stromversorgungsschiene angeschaltet sind. Sobald die Spannung der Kondensatoren unter die Spannung einer der Batterien $V_{B1}$ und $V_{B2}$ sinkt, übernimmt die Batterie mit der höheren Spannung in der vorstehend beschriebenen Weise wieder die Stromversorgung des Systems.

Wenn infolge von starken Stössen oder Schwingungen die mechanischen Schalter kurzzeitig öffnen, versorgen die mit der Stromversorgungsschiene $+V$ bzw. der Speiseleitung $V_T$ für die Sicherheitsschaltung verbundenen Kondensatoren C1 und C2 die Schaltungen mit Strom während eines Zeitraums, der für die Durchführung aller Schaltvorgänge genügt. Die dafür erforderliche Zeit beträgt höchstens wenige Mikrosekunden.

**Patentansprüche**

1. Stromversorgungsschaltung für elektronische Sicherheits-Skibindungen mit einer Batterie ($V_{B1}$), die eine elektronische Schaltung, der über Wandler den jeweiligen auf das Bein des Skiläufers wirkenden Kräften entsprechende Signale zugeführt werden und die ein Auslösesignal an einen Auslösestromkreis mit einem den Auslöseimpuls speichernden Kondensator ($C_{SOL}$) abgibt, wenn das Bein des Skiläufers gefährdende Kräfte auftreten, und den Auslösestromkreis speist, dadurch gekennzeichnet, dass mindestens zwei Batterien ($V_{B1}$, $V_{B2}$) vorgesehen sind, die durch eine elektronische Steuerschaltung (D1, D2, SW3, SW4, SW5) derart mit der elektronischen Schaltung ($+V$) und dem Auslösestromkreis verbunden sind, dass nur eine Batterie ($V_{B1}$) diese speist, dass die Steuerschaltung (D1, D2, SW3, SW4, A2) die Stromversorgung auf die andere Batterie ($V_{B2}$) umschaltet, wenn die Kapazität der ersten Batterie ($V_{B1}$) unter einen Grenzwert abgesunken ist, der mit einem ausreichenden Sicherheitsabstand über dem die Funktionen der elektronischen Schaltung ($+V$) und des Auslösestromkreises aufrechterhaltenden Niveau liegt, und dass die elektronische Steuerschaltung Elemente (A3, SW5) aufweist, die den die Ladung für den Auslöseimpuls speichernden Kondensator ($C_{SOL}$) als Stromversorgungsquelle an die elektronische Schaltung ($+V$) anschliessen, wenn deren Stromversorgung durch die Batterie unterbrochen ist.

2. Stromversorgungsschaltung nach Anspruch 1, dadurch gekennzeichnet, dass die elektronische Steuerschaltung Elemente (G6) aufweist, die bei Absinken der Kapazität auch der zweiten Batterie ($V_{B2}$) unter den Grenzwert alle Stromkreise unterbrechen, die nicht unmittelbar der Sicherheitsauslösung dienen.

**Claims**

1. A power supply circuit for electronic ski bindings, comprising a battery ($V_{B1}$), which feeds an electronic circuit, which is supplied via transducers with signals representing the instantaneous forces acting on the skier's leg and delivers a release signal to a release circuit, which includes a capacitor ($C_{SOL}$) for storing the release pulse and is also fed by the battery, characterized in that at least two batteries ($V_{B1}$, $V_{B2}$) are provided, which by an electronic control circuit (D1, D2, SW3, SW4, SW5) are so connected to the electronic circuit ($+V$) and the release circuit that they are fed only by one battery ($V_{B1}$), that the control circuit (D1, D2, SW3, SW4, A2) effects a change to a supply of power from the other battery ($V_{B2}$) when the capacity of the first battery ($V_{B1}$) has decreased below a limit which is higher by an adequate margin of safety than the level at which the functions of the electronic circuit ($+V$) and the release circuit are maintained, and that the electronic control circuit includes elements (A3, SW5) by which the capacitor ($C_{SOL}$) for storing the release pulse is connected as a power source to the electronic circuit ($+V$) when the power supply thereto from the battery ($V_{B1}$, $V_{B2}$) has been interrupted.

2. A power supply circuit according to claim 1, characterized in that the electronic control circuit comprises elements (G6), which in response to a decrease of the capacity also of the second battery ($V_{B2}$) under the limit interrupt all circuits which do not directly serve for a safety release.

### Revendications

1. Circuit d'alimentation en courant pour fixations de ski de sécurité électroniques avec une batterie ($V_{B1}$) comportant un circuit électronique qui est prévu pour recevoir par l'intermédiaire de transducteurs des signaux correspondant aux forces imprimées à la jambe du skieur et qui donne un signal d'ouverture à un circuit d'ouverture comportant un condensateur ($C_{SOL}$) qui mémorise l'impulsion d'ouverture lorsque des forces dangereuses pour la jambe du skieur se produisent, et qui alimente le circuit d'ouverture, caractérisé en ce qu'au moins deux batteries ($V_{B1}$, $V_{B2}$) sont prévues qui sont connectées au moyen d'un circuit électronique de commande (D1, D2, SW3, SW4, SW5) et au circuit électronique ($+V$) et au circuit d'ouverture de manière à ce qu'une seule batterie ($V_{B1}$) les alimente, que le circuit de commande (D1, D2, SW3, SW4, A2) commute l'alimentation en courant sur l'autre batterie ($V_{B2}$) lorsque la capacité de la première batterie ($V_{B1}$) a baissé au-dessous d'une valeur limite déterminée qui est à une distance de sécurité suffisante au-dessus du niveau maintenant le fonctionnement du circuit électronique ($+V$) et du circuit d'ouverture, et que le circuit de commande électronique comporte des éléments (A3, SW5) qui connectent le condensateur ($C_{SOL}$) qui mémorise la charge pour l'impulsion d'ouverture au circuit électronique ($+V$) pour amener à cette dernière du courant lorsque son alimentation en courant par la batterie ($V_{B1}$, $V_{B2}$) est interrompue.

2. Circuit d'alimentation en courant selon revendication 1, caractérisé en ce que le circuit de commande électronique comporte des éléments (G6) qui, lorsque la capacité de la deuxième batterie ($V_{B2}$) tombe également au-dessous de la valeur limite, interrompt tous les circuits électriques qui ne servent pas directement à l'ouverture de sécurité.

**Fig. 1** Vereinfachtes Blockschema mit den wichtigsten Funktionselementen

Fig. 2 Ausführliches Schaltschema der Ausführungsform für doppelte Redundanz

0 058 202